(19) Europäisches Patentamt
European Patent Office
Office européen des brevets

(11) **EP 4 585 882 A1**

(12) **EUROPÄISCHE PATENTANMELDUNG**

(43) Veröffentlichungstag:
**16.07.2025   Patentblatt 2025/29**

(21) Anmeldenummer: **24151363.9**

(22) Anmeldetag: **11.01.2024**

(51) Internationale Patentklassifikation (IPC):
*G01B 11/00* (2006.01)

(52) Gemeinsame Patentklassifikation (CPC):
**G01B 11/002; G01B 21/042**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **10.01.2024 EP 24151184**

(71) Anmelder: **Siemens Aktiengesellschaft**
**80333 München (DE)**

(72) Erfinder:
• **Schneider, Florian**
  **85586 Poing (DE)**
• **Pantano, Matteo**
  **81379 München (DE)**

(74) Vertreter: **Siemens Patent Attorneys**
**Postfach 22 16 34**
**80506 München (DE)**

(54) **VERFAHREN UND VORRICHTUNG ZUR BESTIMMUNG DER POSITION EINES SENSORS**

(57)    Ein Sensor soll seine Position in einem Arbeitsbereich besser bestimmen können. Dazu werden eine Vorrichtung und ein Verfahren bereitgestellt, bei denen jeweils Positionsmesssignale an einer Vielzahl von Kalibrationspositionen (c) des Sensors (1) in dem dreidimensionalen Raum (2) erfasst werden. Es wird je eine Entstörfunktion auf Basis einer Abweichung des jeweiligen Positionsmesssignals von vorgegebenen Positionsdaten an jeder Kalibrationsposition des Sensors (1) erstellt. Des Weiteren wird eine aktuelle Position des Sensors (1) in dem dreidimensionalen Raum (2) durch den Sensor (1) erfasst. Schließlich wird die erfasste Position unter Verwendung mehrerer Entstörfunktionen von jeweiligen Kalibrationspositionen (c) entstört.

FIG 1

EP 4 585 882 A1

**Beschreibung**

Die vorliegende Erfindung betrifft ein Verfahren zum Bestimmen einer Position eines Sensors im dreidimensionalen Raum. Darüber hinaus betrifft die vorliegende Erfindung eine entsprechende Vorrichtung für die Positionsbestimmung eines Sensors.

In der Robotik und im industriellen Metaversum besteht häufig der Bedarf, die räumliche Position oder Pose (Position und Orientierung) mit Hilfe eines Sensors zu bestimmen. Dabei nimmt der Sensor im Raum beliebige Positionen beziehungsweise Posen ein und liefert entsprechende Positions- beziehungsweise Posendaten.

Hierbei besteht vielfach das Problem, dass die 3-D Sensoren räumliche Daten liefern, welche die tatsächlichen räumlichen Zusammenhänge möglicherweise nicht genau wiedergeben. Diese Ungenauigkeit kann zu fehlerhaften Berechnungen und Entscheidungen führen.

Die Sensordaten müssen daher justiert und korrigiert werden. Traditionell wird hierzu eine Einzelpunkt Kalibrationstechnik verwendet wie etwa in J. Chen et al.: "A Novel Disassembly Strategy of Hexagonal Screws Based on Robot Vision and Robot-Tool Cooperated Motion"; Appl. Sci. 2023, 13(1), 251; https://doi.org/10.3390/app13010251.

Bei dieser Kalibrationstechnik wird der Sensor, der Daten in Bezug auf einen unbekannten Koordinatenursprung liefert, zu einem bestimmten Kalibrierungspunkt gebracht. Dort werden die Sensordaten als Kalibrierungsdaten festgelegt. Während dieser Ansatz die Genauigkeit in der Nähe des Kalibrierungspunkts sicherstellt, zeigen Sensoren mit ungleichmäßiger oder nichtlinearer räumlicher Abbildung mit zunehmender Entfernung vom Kalibrierungspunkt wachsende Datenverzerrungen. Dadurch wird die Genauigkeit der Daten am Kalibrierungspunkt und in der Nähe des Kalibrierungspunkts gewährleistet, aber die Verzerrungen nehmen zu, je weiter man sich vom Kalibrierungspunkt entfernt. Manchmal werden mehrere Kalibrierungen für mehrere Orte verwendet, sodass zwischen den Kalibrierungen gewechselt werden muss, was zu Unstetigkeiten führt.

Die Aufgabe der vorliegenden Erfindung besteht somit darin, die Genauigkeit von Sensordaten in einem größeren Raumbereich zu erhöhen.

Erfindungsgemäß wird diese Aufgabe gelöst durch ein Verfahren und eine Vorrichtung entsprechend den unabhängigen Ansprüchen. Vorteilhafte Weiterbildungen der Erfindung ergeben sich aus den Unteransprüchen.

Erfindungsgemäß wird demnach ein Verfahren zum Bestimmen einer Position eines Sensors im dreidimensionalen Raum bereitgestellt. Beispielsweise wird ein Sensor durch einen Roboter an eine bestimmte Stelle gebracht und soll dort seine aktuelle Position bestimmen. Das Bestimmen der Position beinhaltet üblicherweise auch das Liefern entsprechender Positionsdaten.

Es erfolgt ein Erfassen je eines Positionsmesssignals an einer Vielzahl von Kalibrationspositionen des Sensors in dem dreidimensionalen Raum. Es wird also zunächst in dem dreidimensionalen Raum, in dem sich beispielsweise der Sensor bewegen kann, eine Vielzahl von Punkten festgelegt, an denen eine Kalibration durchgeführt wurde. Vorzugsweise sind diese Kalibrationspositionen regelmäßig in dem Raum beziehungsweise Raumbereich oder Arbeitsbereich verteilt. Der Sensor wird dabei an jede der Kalibrationspositionen gebracht und liefert jeweils ein Positionsmesssignal in Bezug auf seine aktuelle Position. Da die Kalibrationspositionen bekannt beziehungsweise vorgegeben sind, können die jeweils dort aufgenommenen Positionsmesssignale in Bezug auf die tatsächlichen Sensorpositionen kalibriert werden.

Des Weiteren erfolgt ein Erstellen je einer Entstörfunktion auf Basis einer Abweichung des jeweiligen Messsignals (aller) von vorgegebenen Positionsdaten an jeder Kalibrationsposition des Sensors in dem dreidimensionalen Raum. Die Entstörfunktion entspricht beispielsweise einer Transformation einer "gestörten Position" (ungenaue Positionsdaten) in eine exakte Position (exakte Positionsdaten). An den Kalibrationspositionen stehen nämlich sowohl die gestörten als auch die exakten Positionsdaten zur Verfügung. Die Entstörfunktion kann auch als entsprechende Abbildungsfunktion betrachtet werden.

Weiterhin erfolgt ein Erfassen einer aktuellen Position des Sensors in dem dreidimensionalen Raum durch den Sensor. Der Sensor wird also in dem zur Verfügung stehenden Raum beziehungsweise Raumbereich an eine beliebige Position gebracht. Dort erfasst der Sensor seine eigene aktuelle Position. Dies bedeutet, dass der Sensor für die aktuelle Position entsprechende Positionsdaten liefert, die jedoch aufgrund der Unzulänglichkeiten des Sensors gestört sind. Dies bedeutet, dass die vom Sensor gewonnen Positionsdaten gestörte Daten sind, die nicht die tatsächliche Position des Sensors repräsentieren.

Schließlich erfolgt ein Entstören der erfassten Position (gestörte Positionsdaten) des Sensors unter Verwendung mehrerer der erstellten Entstörfunktionen von jeweiligen Kalibrationspositionen (z.B. die der aktuellen Position am nächsten liegen). Das bedeutet, dass die vom Sensor subjektiv erfasste aktuelle Position beziehungsweise die entsprechenden Positionsdaten entstört werden. Dazu mehrere der erstellten Entstörfunktionen verwendet, die an der Vielzahl an jeweiligen Kalibrationspositionen gewonnen wurde. So ergibt sich beispielsweise ein räumliches Kalibrationsnetz, mit dem sich die aktuell gewonnenen Positionsdaten mit erhöhter Genauigkeit in allen Raumbereichen der Kalibrationspositionen entstören lassen. Beispielsweise kann das Entstören auf der Basis von linearen Interpolationen ausgehend von den Kalibrationspositionen erfolgen. Damit kann in praktisch allen notwendigen Raumbereichen eine verfeinerte Entstörung der Positionsmesssignale erfolgen.

Erfindungsgemäß kann somit beispielsweise eine Methode zur Anpassung und Korrektur der Sensordaten bereitgestellt werden, in dem der Fehler an jedem Punkt geschätzt und kompensiert wird. Auf diese Weise werden die Messwerte besser auf die reale räumliche Umgebung abgestimmt. Diese Genauigkeit ist in Bereichen wie virtuelle Realität, Robotik und Navigationssysteme von entscheidender Bedeutung. In vorteilhafter Weise werden so die Sensordaten zuverlässiger und ermöglichen fundiertere Entscheidungen in verschiedenen Anwendungen. Insbesondere kann erfindungsgemäß somit eine genaue Kalibrierung über einen größeren Arbeitsbereich realisiert werden.

In einem Ausführungsbeispiel ist vorgesehen, dass zusätzlich zu der jeweiligen Position auch eine zugehörige Orientierung des Sensors in dem dreidimensionalen Raum erfasst und für das Entstören genutzt wird. Die Position und Orientierung zusammen ergeben die Pose eines jeweiligen Gegenstands, z. B. des Sensors. Wenn in dem vorliegenden Dokument der Begriff "Position" verwendet wird, ist dieser Begriff auch stellvertretend für den Begriff "Pose" zu verstehen. Dies bedeutet, dass zusätzlich zu der Position immer auch eine zugehörige Orientierung erfasst oder genutzt werden kann, wenn dies nicht ausdrücklich ausgeschlossen ist.

Bei einem weiteren Ausführungsbeispiel wird für das Erfassen der Vielzahl von Positionsmesssignalen der Sensor mit einem Roboter an die Kalibrationspositionen in dem dreidimensionalen Raum gebracht. Insbesondere wird der Sensor an jede der Vielzahl an Kalibrationspositionen gebracht. Beispielsweise besitzt der Roboter am Ende seines Arms (TCP: tool center point) einen Kalibrationssockel, in den der Sensor gesteckt wird. Damit steht der Sensor im Kalibrationssockel in einer festen räumlichen Beziehung zu dem Roboter beziehungsweise zu einem Weltkoordinatensystem. Somit können Positionsmesssignale an fest vorgegebenen Kalibrationspositionen aufgenommen werden.

Gemäß einem anderen Ausführungsbeispiel ist vorgesehen, dass die Kalibrationspositionen ein regelmäßiges Gitter in dem dreidimensionalen Raum darstellen. Kann sich der Sensor beispielsweise in einem dreidimensionalen Arbeitsbereich bewegen, so sollte dieser Arbeitsbereich mit dem regelmäßigen Gitter ausgefüllt sein. Auf diese Weise kann gewährleistet werden, dass zu nahezu jedem Punkt in dem Arbeitsbereich eine maximale Distanz zu einem Gitterpunkt nicht überschritten wird. Damit kann in jedem Punkt des Arbeitsbereichs eine gewisse Kalibrationsqualität erreicht werden.

Insbesondere kann es sich bei den regelmäßigen Gittern um ein quaderförmiges, ggf. kubisches Gitter handeln (d.h. mit quaderförmigen bzw. kubischen Einzelzellen). Beispielsweise wird der Arbeitsbereich durch ein quaderförmiges Gitter mit zwei*zwei*zwei oder drei*drei*drei Gitterpunkten realisiert. Natürlich ist es nicht notwendig, dass das gesamte Gitter selbst einen Quader, Kubus oder sonstigen regelmäßigen Körper darstellt. Auch muss nicht jeder Gitterpunkt Teil eines vollständigen Gitterwürfels sein. Vielmehr können insbesondere am Rand des Gitters auch Gitterpunkte vorgesehen sein, die zwar zum nächstgelegenen Gitterpunkt den gleichen Abstand besitzen wie die übrigen Gitterpunkte zueinander, die aber nicht Teil eines vollständigen Würfels sind. Alternativ kann das regelmäßige Gitter auch ein hexagonales Gitter oder ein andere beispielsweise aus der Kristallografie bekanntes Gitter sein.

Im Falle des quaderförmigen Gitters kann dieses in Tetraeder unterteilt werden, wobei für die aktuelle Position des Sensors in Bezug auf denjenigen Tetraeder, in dem die aktuelle Position liegt, Baryzentrische Koordinaten gewonnen werden, aus den Entstörfunktionen an den Ecken desjenigen Tetraeders Translationsvektoren und Rotationsvektoren extrahiert werden, und die aktuelle Position durch lineare Interpolation der Baryzentrischen Koordinaten mit Hilfe der Translationsvektoren und der Rotationsvektoren entstört wird. Das Entstören der Position bedeutet, dass die Positionsmesssignale mit Hilfe der Positionsmesssignale an den Kalibrationspositionen korrigiert werden. Die Unterteilung des quaderförmigen Gitters in Tetraeder und die Nutzung der Baryzentrischen Koordinaten führt zu einer Verfeinerung der Entstörfunktion (gegenüber der Verwendung nur der Quadergitterpunkte). Das quaderförmige Gitter kann beispielsweise durch eine Delaunay-Triangulation in Tetraeder unterteilt werden. Auch andere Triangulationsverfahren können dazu genutzt werden.

In einer vorteilhaften Ausgestaltung des Verfahrens können die Rotationsvektoren als Quaternionen repräsentiert werden. Mit Hilfe der Quaternionen lassen sich Rotationen vorteilhaft berechnen.

In einem weiteren Ausführungsbeispiel kann vorgesehen sein, dass der Sensor seine aktuelle Position in einem Sensorkoordinatensystem mit einem Sensorursprung $o$, der eine vorgegebene räumliche Beziehung zu einem Weltkoordinatensystem $w$ hat, erfasst. Der Sensor kann damit seine Position in einem beliebigen Sensorkoordinatensystem erfassen. Steht das Sensorkoordinatensystem in einer festen vorgegebenen Beziehung zu dem Weltkoordinatensystem, so kann die aktuelle Sensorposition beziehungsweise -pose in Weltkoordinaten umgerechnet werden.

Gemäß einem weiteren Ausführungsbeispiel ist vorgesehen, dass die die jeweilige Entstörfunktion $U$ lautet:

$$U = {}^{\hat{s}}T_{\check{s}} = \left( {}^{w}T_{o}\, {}^{o}T_{\tilde{s}} \right)^{-1} {}^{w}T_{c}$$

dabei bedeuten

${}^{\hat{s}}T_{\check{s}}$ eine Transformation (Matrix) eines realen Punkts $\hat{s}$ zu einem gestörten Punkt $\check{s}$,
${}^{w}T_{o}$ eine Transformation des Sensorursprungs $o$ zu dem Weltkoordinatenpunkt $w$,

$^{o}T_{\tilde{s}}$ eine Transformation eines gestörten Punkts $\tilde{s}$ zu dem Sensorursprung $o$ und

$^{w}T_{c}$ eine Transformation eines Kalibrationspunkts $c$ zu einem Weltkoordinatenpunkt $w$.

Die Entstörfunktion $U$ lässt sich damit aus drei Transformationen herleiten, die in der Regel für das Sensorsystem bekannt sind. Wie den einzelnen Transformationen zu entnehmen ist, ergeben sie sich aus den Beziehungen zwischen Sensorursprung $o$ (Ursprung des Sensorkoordinatensystems), Weltkoordinatenpunkt $w$ sowie den Positionsmesssignalen an einem beliebigen Punkt (gestörter Punkt $\tilde{s}$) und einem Kalibrationspunkt $c$. Die genannten Transformationen lassen sich in der Regel durch entsprechende Transformationsmatrizen darstellen.

Die obige Aufgabe wird erfindungsgemäß auch gelöst durch eine Vorrichtung zum Bestimmen einer Position eines Sensors im dreidimensionalen Raum mit

- dem Sensor zum Erfassen je eines Positionsmesssignals an einer Vielzahl von Kalibrationspositionen des Sensors in dem dreidimensionalen Raum und
- einer Recheneinrichtung zum Erstellen oder Bereitstellen je einer Entstörfunktion auf Basis einer Abweichung des jeweiligen Messsignals (aller) von vorgegebenen Positionsdaten an jeder Kalibrationsposition des Sensors in dem dreidimensionalen Raum, wobei
- der Sensor auch ausgebildet ist zum Erfassen einer aktuellen Position des Sensors in dem dreidimensionalen Raum und
- die Recheneinrichtung ausgebildet ist zum Entstören der erfassten Position des Sensors unter Verwendung mehrerer der Entstörfunktionen von jeweiligen Kalibrationspositionen.

Der Sensor ist somit in der Lage, seine eigene Position an unterschiedlichen Orten festzustellen. Dazu bedarf es in der Regel eines üblichen Bezugssystems. Dieses Bezugsystem kann das Sensorkoordinatensystem sein, in dessen Ursprung eine physikalische Einheit angeordnet ist, mit der der Sensor in Wirkverbindung steht.

Die Recheneinrichtung kann beispielsweise einen Prozessor und einen Speicher aufweisen um entsprechende Rechenschritte auszuführen.

Die oben im Zusammenhang mit dem erfindungsgemäßen Verfahren genannten Verfahrensmerkmale können auch als funktionelle Merkmale der erfindungsgemäßen Vorrichtung gesehen werden. Für die entsprechenden Funktionen weist die Vorrichtung korrespondierende Mittel auf. Die oben im Zusammenhang mit dem Verfahren genannten Vorteile und Weiterbildungen gelten sinngemäß somit auch für die erfindungsgemäße Vorrichtung.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:

FIG 1      eine schematische Ansicht eines Ausführungsbeispiels einer Vorrichtung zum Bestimmen der Position eines Sensors im dreidimensionalen Raum;

FIG 2      ein 2x2x2-Gitter eines Arbeitsbereichs unterteilt in Tetraeder;

FIG 3      ein 3x3x3-Gitter eines Arbeitsbereichs unterteilt in Tetraeder; und

FIG 4      ein schematisches Ablaufdiagramm eines Ausführungsbeispiels eines erfindungsgemäßen Verfahrens.

Die nachfolgend näher beschilderten Ausführungsbeispiele stellen bevorzugte Ausführungsformen der vorliegenden Erfindung dar.

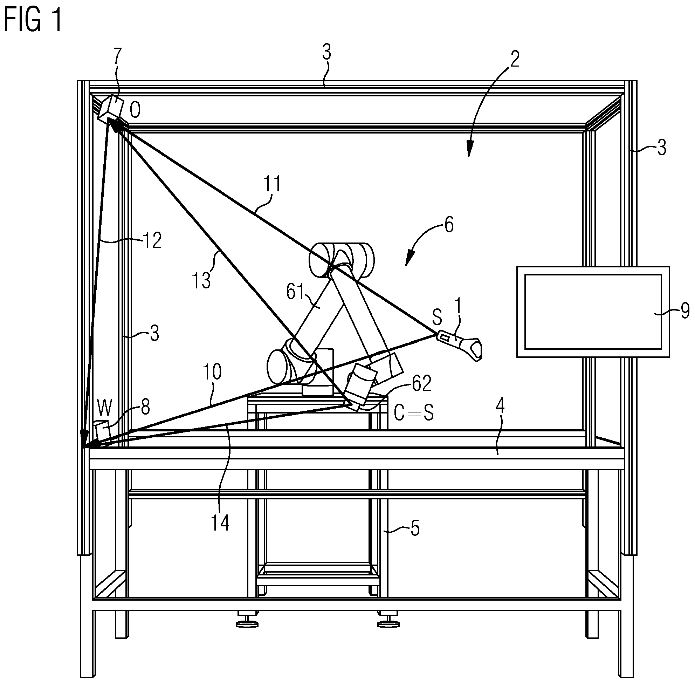

In FIG 1 ist ein Sensor 1 dargestellt, der in einem Arbeitsbereich 2 bewegbar ist. Beispielsweise kann der Arbeitsbereich 2 im Inneren eines Rahmens 3 liegen. An dem Rahmen können gegebenenfalls beliebige Komponenten der Vorrichtung befestigt sein. Im vorliegenden Beispiel ist ein Tisch 4 an dem Rahmen 3 befestigt. An dem Rahmen 3 ist hier weiterhin exemplarisch ein Podest 5 befestigt, auf dem sich ein Roboter 6 befindet. Der Roboter 6 weist einen Roboterarm 61 auf, an dessen distalem Ende sich ein Kalibrationssockel 62 befindet. In diesem Kalibrationssockel 62 kann der Sensor 1 eingesteckt werden.

Darüber hinaus weist die in FIG 1 skizzierte Vorrichtung eine Sensorbasis 7 (am Sensorursprung) auf, gegenüber der der Sensor 1 seine Position und/oder Orientierung (nachfolgend kurz Pose genannt) ermitteln kann. Gegebenenfalls besitzt die Sensorbasis auch mehrere Elemente, mit denen der Sensor 1 seine Pose im dreidimensionalen Raum ermitteln kann. Die Sensorbasis 7 muss nicht im Arbeitsbereich 2 und auch nicht innerhalb des Rahmens 3 gelegen sein. Sie sollte allerdings in der Nähe des Sensors angeordnet sein, sodass beide miteinander berührungslos kommunizieren können. Beispielsweise erfolgt die Kommunikation zwischen Sensor 1 und Sensorbasis 7 mittels eines Infrarotstrahls. Es können aber auch andere elektromagnetische Strahlen verwendet werden. Prinzipiell wären hierfür auch andere Kommunikationstechniken, beispielsweise auf Basis von Ultraschall möglich. Gegebenenfalls weist der Sensor 1 auch eine stereoskopische Kamera auf, mit der er gegenüber der Sensorbasis entsprechende Positions- beziehungsweise Orientierungsmessungen durchführen kann.

Darüber hinaus weist die Vorrichtung beispielsweise auch ein Bezugselement 8 auf, welches eine fest vorgegebene Position im Raum besitzt. Gegebenenfalls ist seine Position eindeutig mit Weltkoordinaten definiert. Die Sensorbasis 7 steht mit dem Bezugselement 8 vorzugsweise über elektromagnetische Strahlung in Verbindung. Damit kann entweder das Bezugselement 8 oder die Sensorbasis 7 selbst ihre Koordinaten gegenüber dem Bezugselement 8 feststellen. Beispielsweise kann der Vektor von der Sensorbasis 7 zu dem Bezugselement 8 mit Hilfe von Weltkoordinaten ausgedrückt werden.

Die Vorrichtung weist ferner eine Recheneinrichtung 9 auf, die in FIG 1 mit einem Bildschirm symbolisiert ist. Mit der Recheneinrichtung 9 können, wie unten dargestellt werden wird, Entstörfunktionen zum Entstören von Positionsmesssignalen des Sensors 1 erstellt und entsprechend entstörte Positionsdaten berechnet werden.

Der Sensor 1 befindet sich in FIG 1 in einer Position beziehungsweise Pose s. Die Sensorbasis 7 befindet sich in einer räumlichen Position o und das Bezugselement 8 befindet sich in einer Position w. Die räumliche Beziehung zwischen dem Sensor 1 an der Sensorposition s und dem Weltkoordinatenpunkt w des Bezugselement 8 wird durch den Vektor 10 repräsentiert. In ähnlicher Weise repräsentiert der Vektor 11 die räumliche Beziehung zwischen dem Sensor 1 an der Sensorposition s und der Sensorbasis 7 am Sensorursprung o. Ferner repräsentiert der Vektor 12 die räumliche Beziehung zwischen der Sensorbasis 7 am Sensorursprung o und dem Bezugselement 8 an dem Weltkoordinatenpunkt w.

Der Sensor 1 ermittelt seine aktuelle Position in der Regel mit einem gewissen Messfehler, hier auch Störung genannt. Daher wird der Sensor an vielen Kalibrationspunkten in dem Arbeitsbereich 2 kalibriert. Dazu wird der Sensor 1 beispielsweise gemäß FIG 1 in den Kalibrationssockel 62 des Roboters 6 gesteckt und zu dem jeweiligen Kalibrationspositionen bewegt. Diese Kalibrationspositionen sind von vornherein bekannt und ihre Koordinaten sind genau definiert. Liefert nun der Sensor 1 an einer Kalibrationsposition c ein Positionsmesssignal, das einer "gestörten Position" ŝ und nicht der tatsächlichen Position š entspricht, so kann die Abweichung beziehungsweise Störung an dieser Stelle ermittelt werden, da ja die tatsächliche Position š der Kalibrationsposition c entspricht. An der Kalibrationsposition c wird die räumliche Beziehung zwischen Sensor 1 und Sensorbasis 7 durch einen Vektor 13 repräsentiert. Die räumliche Beziehung zwischen der Kalibrationsposition c und dem Weltkoordinatenpunkt w wird durch den Vektor 14 repräsentiert.

Die Vektoren 10 - 14 können neben Positionsinformationen auch Rotationsinformationen repräsentieren. Somit kennt der Sensor 1 neben seiner relativen Position zur Sensorbasis 7 gegebenenfalls auch seine relative Orientierung zu ihr. Der Sensor 1 kann damit seine Pose gegenüber der Sensorbasis 7 ermitteln, was durch die Vektoren 11 und 13 symbolisiert ist.

Die Kalibration kann an mehreren Kalibrationspositionen c im Arbeitsbereich 2 durchgeführt werden. Die Kalibrationspositionen c können beispielsweise entsprechend einem quaderförmigen bzw. kubischen Gitter im Raum verteilt sein. Auch andere Verteilungen können gewählt werden, zum Beispiel dichteste Kugelpackung.

Mit diesen vielen im Raum verteilten Kalibrationen kann eine räumliche Entstörfunktion erstellt werden. Diese Entstörfunktion liefert zumindest an den Kalibrationspositionen optimale Werte. An allen anderen Positionen können Interpolationen vorgenommen werden in Bezug auf die jeweils nächstgelegenen Kalibrationspositionen. Somit kann eine erhöhte Genauigkeit erzielt werden im Vergleich zu einer Systemkalibration an nur einem einzigen Kalibrationspunkt.

Nachfolgend wird die Erstellung einer Entstörfunktion und eine damit durchgeführte Entstörung im Detail erläutert.

Der Kalibrierungsprozess (auch Kalibrationsprozess genannt) für Sensoren mit beliebigem Ursprung besteht darin, eine Transformation zu finden, die die Ursprungskoordinaten des Sensors auf Weltkoordinaten abbildet.

Es kann folgende Notationskonvention getroffen werden, nämlich $s$: Sensorposition, $w$: Weltkoordinatenpunkt, $o$: Sensorursprung, $c$: Kalibrationsposition, $T$: homogene Transformation.

Wenn sich der Sensor in der Kalibrationsposition befindet, gilt:

$$1) \quad {}^{w}T_o = {}^{w}T_s\, {}^{s}T_o = {}^{w}T_c\, {}^{s}T_o = {}^{w}T_c\, \left({}^{o}T_s\right)^{-1}$$

Dies ist die Transformation $T$ von einem unbekannten Sensorursprung $o$ zu einem bekannten Weltkoordinaten $w$ (Transformation von $o$ nach $w$). Diese ergibt sich aus einer Multiplikation der Transformation von $o$ nach $s$ mit einer Transformation von $s$ nach $w$. In der Kalibrationsposition gilt: $c = s$, weshalb dort die Transformation von $s$ nach $w$ der Transformation von $c$ nach $w$ entspricht. Darüber hinaus entspricht die Transformation von $o$ nach $s$ der inversen Transformation von *s* nach *c*.

Folglich kann die Sensorposition in Bezug auf die Weltkoordinaten wie folgt verfügbar gemacht werden:

$$2) \quad {}^{w}T_{s} = {}^{w}T_{o} \, {}^{o}T_{s}$$

Dabei handelt es sich um einen Einpunkt-Kalibrierungsalgorithmus, der sicherstellt, dass die Sensorposition der wahren Kalibrationsposition entspricht. Da jedoch jeder übliche Sensor eine nichtlineare räumliche Abbildung liefert, wird die wahre Sensorposition $\hat{s}$ durch ein Verzerrungsfeld ${}^{\hat{s}}T_{\tilde{s}}$ verzerrt, was zu den erhaltenen (gestörten) Sensordaten $\tilde{s}$ führt:

$$3) \quad {}^{o}T_{\tilde{s}} = {}^{o}T_{\hat{s}} \, {}^{\hat{s}}T_{\tilde{s}}$$

Grundsätzlich ist man an der wahren Sensorposition $\hat{s}$ in Bezug auf die Weltkoordinaten interessiert (${}^{w}T_{\hat{s}}$). Gleichung 2) ist hierzu nur verwendbar, wenn die wahre Sensorposition in Bezug auf den Sensorursprung *o* angegeben wird (${}^{o}T_{\hat{s}}$). Man kann nur die erhaltenen Sensordaten $\tilde{s}$ in der Nähe der Kalibrationsposition einfügen, wobei $\tilde{s} \approx \hat{s}$.

Um die wahre Sensorposition $\hat{s}$ überall zu erhalten, muss eine noch unbekannte Entstörtransformation (Entstörfunktion) angewandt werden, nämlich $U = {}^{\tilde{s}}T_{\hat{s}}$.

$$4) \quad {}^{o}T_{\hat{s}} = {}^{o}T_{\tilde{s}} \, {}^{\tilde{s}}T_{\hat{s}}$$

Wenn man das Ergebnis der Gleichung 4) in Gleichung 2) einsetzt, erhält man die wahre Sensorposition in Bezug auf Weltkoordinaten:

$$5) \quad {}^{w}T_{\hat{s}} = {}^{w}T_{o} \, {}^{o}T_{\hat{s}}$$

Wäre nun die Entstörfunktion *U* überall im Raum bekannt, hätte man die wahre Sensorposition $\hat{s}$ in Bezug auf die Weltkoordinaten *w* und somit einen perfekten Sensor. Daher muss die Entstörfunktion *U* für jeden Punkt im Raum abgeleitet werden. Dazu wird ein Kalibrierungspunkt benötigt, der im Raum an einem bekannten Ort bewegt werden kann, zum Beispiel mit Hilfe eines Kalibrationssockels 62 an einem Roboter-TCP (tool center point). Der Arbeitsbereich 2 kann beispielsweise in ein quaderförmiges Gitter mit zum Beispiel 2x2x2 oder 3x3x3 Punkten unterteilt werden. Jeder dieser Punkte stellt eine Kalibrationsposition dar, und die Entzerrfunktion *U* lässt sich wie folgt berechnen:

$$6) \quad U = {}^{\tilde{s}}T_{\hat{s}} = {}^{\tilde{s}}T_{w} \, {}^{w}T_{\hat{s}} = ({}^{w}T_{\tilde{s}})^{-1} \, {}^{w}T_{c} \approx ({}^{w}T_{o} \, {}^{o}T_{\tilde{s}})^{-1} \, {}^{w}T_{c}$$

Die in FIG 1 dargestellten Vektoren 10 - 14 lassen sich wie folgt zu den jeweiligen Transformationen zuordnen:

Vektor 10: ${}^{w}T_{\tilde{s}}$
Vektor 11: ${}^{o}T_{\tilde{s}}$
Vektor 12: ${}^{w}T_{o}$
Vektor 13: ${}^{o}T_{\hat{s}}$
Vektor 14: ${}^{w}T_{c}$

Dieser Vorgang muss einmal durchgeführt werden, wobei die Entstörungen für jeden Quadergitterpunkt gespeichert werden.

Nachdem die Entstörungen beziehungsweise Entstörtransformationen für den gesamten Arbeitsbereich gesammelt wurden, kann das quaderförmige Gitter beispielsweise mit Delaunay-Triangulation in Tetraeder unterteilt werden, was eine Baryzentrische Interpolation ermöglicht.

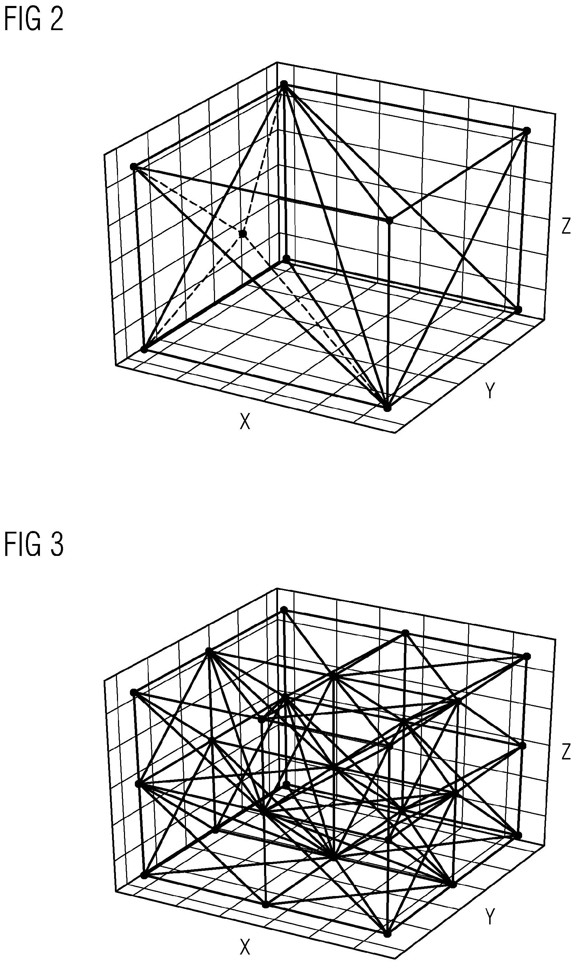

Die FIG 2 und 3 zeigen jeweils einen Arbeitsbereich, der in ein quaderförmiges Gitter mit bekannten Entstörwerten an jedem Gitterpunkt. FIG 2 zeigt ein 2x2x2-Gitter und FIG 3 ein 3x3x3-Gitter.

Die Quader sind in Tetraeder trianguliert, wobei die Kanten in den Figuren schwarz eingezeichnet sind. An den Gitterpunkten werden Translations- und Rotationskomponenten der Entstörfunktion extrahiert, wobei die Rotationskomponenten beispielsweise als Quaternionen dargestellt werden.

Für einen beliebigen Punkt P von Interesse im Arbeitsbereich (vergleich FIG 2) werden das entsprechende Tetraeder und die Kanten (in FIG 2 gestrichelte Linien) zu den Tetraederecken identifiziert. Anschließend wird der entsprechende Entstörwert aus den gewichteten Kantenlängen interpoliert. Das Gewichten erfolgt in Abhängigkeit vom inversen Abstand. Der translatorische Teil von *T* wird vorzugsweise linear interpoliert, und die Quaternionen vorzugsweise mit SLERP (spherical linear interpolation), um Werte im Quaternionenraum zu gewährleisten.

Für jeden beliebigen Punkt P kann somit eine Entstörtransformation beziehungsweise Entstörfunktion interpoliert und auf die Sensor-Rohdaten angewandt werden, um unverzerrte beziehungsweise entstörte Sensordaten mit erheblich besserer Genauigkeit zu erhalten sowohl in Bezug auf die Translation als auch auf die Rotation.

Während das 2x2x2-Gitter eine bessere Gesamtleistung (inklusiv Rechenaufwand) bietet, weist das 3x3x3-Gitter eine höhere Genauigkeit an jedem einzelnen Punkt auf.

Im Vergleich zur herkömmlichen Ein-Punkt-Kalibrierung bietet das erfindungsgemäße Verfahren enorme Leistungsgewinne für Sensorpositionsdaten, die in größerer Entfernung vom Kalibrierungsort gewonnen wurden, ohne dass die Qualität in der Nähe des Kalibrierungsorts beeinträchtigt wird. Insbesondere bei einer höheren Anzahl von Gitterpunkten ist der Leistungsgewinn erheblich. Dies ermöglicht eine gute Sensorgenauigkeit für den gesamten Arbeitsbereich, selbst für Sensoren mit nicht-linearen räumlichen Abbildungen.

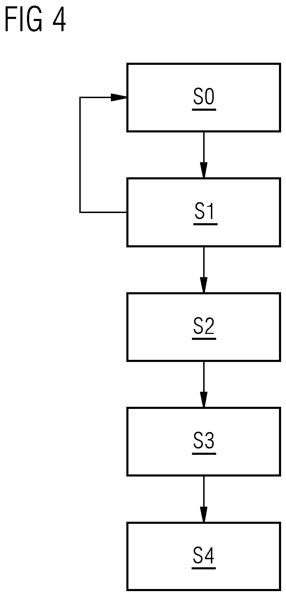

FIG 4 zeigt einen schematischen Verfahrensablauf eines Ausführungsbeispiels der vorliegenden Erfindung. In einem Schritt S0 wird ein Sensor positioniert. In einem anschließendem Schritt S1 erfasst der Sensor Positionsmesssignale in Bezug auf seine Position und/oder Orientierung. Die Schritte S0 und S1 werden für eine Vielzahl an Kalibrationspositionen, die bekannt beziehungsweise vorgegeben sind, wiederholt. In einem weiteren Schritt S2 wird für jede Kalibrationsposition jeweils eine Entstörfunktion beziehungsweise ein Entstörwert erstellt.

In einem weiteren Schritt S3 erfolgt ein Erfassen einer aktuellen Position des Sensors. Schließlich erfolgt in einem Schritt S4 ein Entstören der in Schritt S3 erfassten Position unter Verwendung mehrerer der in Schritt S2 erstellten Entstörfunktionen. Beispielsweise werden diejenigen Entstörfunktionen verwendet, deren korrespondierende Kalibrationspositionen der erfassten Position am nächsten liegen. Gegebenenfalls sind es auch die Entstörfunktionen der Eckpunkte eines Quaders oder eines Tetraeders in dem sich die erfasste Position befindet.

Bezugszeichenliste

| | |
|---|---|
| 1 | Sensor |
| 2 | Arbeitsbereich |
| 3 | Rahmen |
| 4 | Tisch |
| 5 | Sockel |
| 6 | Roboter |
| 7 | Sensorbasis |
| 8 | Bezugselement |
| 9 | Recheneinrichtung |
| 10 | Vektor |
| 11 | Vektor |
| 12 | Vektor |
| 13 | Vektor |
| 14 | Vektor |
| 61 | Roboterarm |
| 62 | Kalibrationssockel |
| c | Kalibrationsposition |
| o | Sensorursprung |
| s | Sensorposition |
| w | Weltkoordinaten |
| P | Punkt |
| S0 | Schritt |
| S1 | Schritt |
| S2 | Schritt |
| S3 | Schritt |
| S4 | Schritt |

**Patentansprüche**

1. Verfahren zum Bestimmen einer Position (P) eines Sensors (1) im dreidimensionalen Raum (2) durch

   - Erfassen (S1) je eines Positionsmesssignals an einer Vielzahl von Kalibrationspositionen (c) des Sensors (1) in dem dreidimensionalen Raum (2),
- Erstellen (S2) je einer Entstörfunktion auf Basis einer Abweichung des jeweiligen Positionsmesssignals von vorgegebenen Positionsdaten an jeder Kalibrationsposition (c) des Sensors (1) in dem dreidimensionalen Raum (2),
- Erfassen (S3) einer aktuellen Position des Sensors (1) in dem dreidimensionalen Raum (2) durch den Sensor (1),
- Entstören (S4) der erfassten Position des Sensors (1) unter Verwendung mehrerer der Entstörfunktionen von jeweiligen Kalibrationspositionen (c).

2. Verfahren nach Anspruch 1, wobei zusätzlich zu der jeweiligen Position auch eine zugehörige Orientierung des Sensors (1) in dem dreidimensionalen Raum (2) erfasst und für das Entstören (S4) genutzt wird.

3. Verfahren nach Anspruch 1 oder 2, wobei für das Erfassen je eines Positionsmesssignals an einer Vielzahl von Kalibrationspositionen (c) der Sensor (1) mit einem Roboter (6) an die Kalibrationspositionen (c) in dem dreidimensionalen Raum (2) gebracht wird.

4. Verfahren nach einem der vorhergehenden Ansprüche, wobei die Kalibrationspositionen (c) ein regelmäßiges Gitter in dem dreidimensionalen Raum (2) darstellen.

5. Verfahren nach Anspruch 4, wobei das regelmäßige Gitter ein quaderförmiges Gitter ist.

6. Verfahren nach Anspruch 5, wobei das quaderförmige Gitter in Tetraeder unterteilt wird, für die aktuelle Position des Sensors (1) in Bezug auf denjenigen Tetraeder, in dem die aktuelle Position (P) liegt, Baryzentrische Koordinaten gewonnen werden, aus den Entstörfunktionen an den Ecken desjenigen Tetraeders Translationsvektoren und Rotationsvektoren extrahiert werden, und die aktuelle Position (P) durch lineare Interpolation der Baryzentrischen Koordinaten mit Hilfe der Translationsvektoren und der Rotationsvektoren entstört wird.

7. Verfahren nach Anspruch 6, wobei die Rotationsvektoren als Quaternionen repräsentiert werden.

8. Verfahren nach einem der vorhergehenden Ansprüche, wobei der Sensor (1) seine aktuelle Position in einem Sensorkoordinatensystem mit einem Sensorursprung $o$, der eine vorgegebenen räumliche Beziehung zu einem Weltkooridinatenpunkt $w$ hat, erfasst.

9. Verfahren nach Anspruch 7, wobei die jeweilige Entstörfunktion U lautet:

$$U = {}^{\check{s}}T_{\hat{s}} = \left( {}^{w}T_{o}\ {}^{o}T_{\tilde{s}} \right)^{-1}\ {}^{w}T_{c}$$

dabei bedeuten

${}^{\check{s}}T_{\hat{s}}$ eine Transformation eines realen Punkts $\hat{s}$ zu einem gestörten Punkt $\check{s}$,
${}^{w}T_{o}$ eine Transformation des Sensorursprungs $o$ zu dem Weltkoordinatenpunkt $w$,
${}^{o}T_{\tilde{s}}$ eine Transformation eines gestörten Punkts $\tilde{s}$ zu dem Erfassungspunkt $o$ und
${}^{w}T_{c}$ eine Transformation eines Kalibrationspunkts $c$ zu einem Weltkoordinatenpunkt $w$.

10. Vorrichtung zum Bestimmen einer Position (P) eines Sensors (1) im dreidimensionalen Raum (2) mit

- dem Sensor (1) zum Erfassen je eines Positionsmesssignals an einer Vielzahl von Kalibrationspositionen (c) des Sensors (1) in dem dreidimensionalen Raum (2) und
- einer Recheneinrichtung (9) zum Erstellen oder Bereitstellen je einer Entstörfunktion auf Basis einer Abweichung des jeweiligen Messsignals von vorgegebenen Positionsdaten an jeder Kalibrationsposition (c) des Sensors (1) in dem dreidimensionalen Raum (2), wobei
- der Sensor (1) auch ausgebildet ist zum Erfassen einer aktuellen Position (P) des Sensors (1) in dem dreidimensionalen Raum (2) und
- die Recheneinrichtung (9) ausgebildet ist zum Entstören der erfassten Position des Sensors (1) unter Verwendung mehrerer der Entstörfunktionen von jeweiligen Kalibrationspositionen (c).

FIG 1

EP 4 585 882 A1

FIG 2

FIG 3

FIG 4

Europäisches
Patentamt

European
Patent Office

Office européen
des brevets

# EUROPÄISCHER RECHERCHENBERICHT

**Nummer der Anmeldung**

EP 24 15 1363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/186681 A1 (HARLE NORBERT [DE]) 23. September 2004 (2004-09-23) * Absätze [0024] - [0030]; Anspruch 1; Abbildungen 1-3 * ----- | 1-10 | INV. G01B11/00 |
| A | US 2023/314563 A1 (HARTMANN NICK [US]) 5. Oktober 2023 (2023-10-05) * Absätze [0028] - [0036]; Abbildung 1 * * Absätze [0107] - [0133]; Abbildungen 16-17 * ----- | 1-10 | |

**RECHERCHIERTE SACHGEBIETE (IPC)**

G01B

Der vorliegende Recherchenbericht wurde für alle Patentansprüche erstellt

| Recherchenort | Abschlußdatum der Recherche | Prüfer |
|---|---|---|
| München | 7. Juni 2024 | Trique, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

  ...........................................................................................................
& : Mitglied der gleichen Patentfamilie, übereinstimmendes Dokument

EPO FORM 1503 03.82 (P04C03)

ANHANG ZUM EUROPÄISCHEN RECHERCHENBERICHT
ÜBER DIE EUROPÄISCHE PATENTANMELDUNG NR.

EP 4 585 882 A1

EP 24 15 1363

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-06-2024

| Im Recherchenbericht angeführtes Patentdokument | Datum der Veröffentlichung | Mitglied(er) der Patentfamilie | Datum der Veröffentlichung |
|---|---|---|---|
| US 2004186681 A1 | 23-09-2004 | CA 2458014 A1 | 22-08-2004 |
| | | DE 10307580 B3 | 03-06-2004 |
| | | EP 1450175 A2 | 25-08-2004 |
| | | US 2004186681 A1 | 23-09-2004 |
| US 2023314563 A1 | 05-10-2023 | KEINE | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. CHEN et al.** A Novel Disassembly Strategy of Hexagonal Screws Based on Robot Vision and Robot-Tool Cooperated Motion. *Appl. Sci.*, 2023, vol. 13 (1), 251, https://doi.org/10.3390/app13010251